(19) Europäisches Patentamt
European Patent Office
Office européen des brevets

(11) **EP 4 462 374 A1**

(12) **EUROPEAN PATENT APPLICATION**

(43) Date of publication:
**13.11.2024 Bulletin 2024/46**

(21) Application number: **23172034.3**

(22) Date of filing: **08.05.2023**

(51) International Patent Classification (IPC):
*G06V 10/143* (2022.01)    *G06V 10/24* (2022.01)
*G06V 10/75* (2022.01)     *G06V 10/774* (2022.01)
*G06V 10/80* (2022.01)     *G06V 10/82* (2022.01)
*G06V 20/56* (2022.01)     *G06V 20/64* (2022.01)
*G06V 20/70* (2022.01)     *G06N 3/08* (2023.01)

(52) Cooperative Patent Classification (CPC):
**G06V 10/811; G06N 3/09; G06V 10/143;**
**G06V 10/247; G06V 10/753; G06V 10/774;**
**G06V 10/82; G06V 20/588; G06V 20/64;**
**G06V 20/70;** G06V 2201/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Elektrobit Automotive GmbH**
**91058 Erlangen (DE)**

(72) Inventors:
• **Chandrasekaran, Kavin**
  **81739 München (DE)**
• **Nourbakhsh, Seyed Hami**
  **81739 München (DE)**

(74) Representative: **Continental Corporation**
**c/o Continental Automotive Technologies GmbH**
**Intellectual Property**
**Putzbrunnerstr. 69**
**81739 München (DE)**

(54) **VEHICLE, AUTONOMOUS/ASSISTED DRIVING SYSTEM, COMPUTER PROGRAM, APPARATUS, AND METHOD FOR AN AUTONOMOUS/ASSISTED DRIVING SYSTEM**

(57)    The present disclosure relates to a vehicle, an autonomous/assisted driving system (ADS) a computer program, an apparatus (600), and a method (100) for an autonomous/assisted driving system. The method (100) comprises obtaining (110) a top view representation of labels of a traffic environment in Cartesian coordinates from sample data. The method (100) also comprises obtaining (120) a transformation matrix for transforming Cartesian coordinates in an observation coordinate system of a perspective of an environmental sensor of the ADS. Further, the method (100) provides for applying (130) the transformation matrix to the top view representation of the labels to obtain a perspective representation of the traffic environment in the observation coordinate system.

FIG 1

Obtaining a top view representation on a traffic environment —110

Obtaining a transformation matrix —120

Applying the transformation matrix to the Cartesian representation of the traffic environment —130

EP 4 462 374 A1

## Description

Technical field

The present disclosure relates to a vehicle, an autonomous/assisted driving system (ADS), a computer program, an apparatus, and a method for an autonomous/assisted driving system. In particular, the proposed concept relates to an approach for preparing and processing training data of a neural network for an ADS.

Semantic segmentation plays an increasingly important role in autonomous and assisted driving, localization, robotic navigation, scene understanding, and the like. However, in practice, not enough appropriate training data may be available for training neural networks for such tasks.

Hence, there is a demand of an improved concept for preparing training data for training neural networks.

This demand may be satisfied by the subject-matter of the appended independent claims. Appended dependent claims specify advantageous embodiments of the claimed subject-matter.

Summary

Embodiments of the present disclosure relate to a method for an autonomous/assisted driving system (ADS) for a vehicle. The method comprises obtaining a top view representation of labels of a traffic environment in Cartesian coordinates from sample data. The method also comprises obtaining a transformation matrix for transforming Cartesian coordinates in an observation coordinate system of a perspective of an environmental sensor of the ADS. Further, the method provides for applying the transformation matrix to the top view representation of the labels to obtain a perspective representation of the traffic environment in the observation coordinate system. The perspective representation, then, may be used as ground truth along with training data for training the neural network together with related sensor data of the traffic environment.

In this way, the suitability of sample data for training the neural network may be achieved or at least improved. So, in practice, the proposed method, e.g., allows to use such sample data for training the neural network for the use with the environmental sensor having a different view on the traffic situation than the initial sample data (top view representation). Thus, more training data may be available for the training for the benefit of a better trained neural network. In practice, the proposed method, e.g., may be applied for preparing training data for the use of the neural network with the environmental sensor from measurement data of another environmental sensor of any other sensor type (different from the environmental sensor). Accordingly, the sample data may be indicative of measurement data of the other environmental sensor. In some implementations, in this way, e.g.,

training data for the use with a camera may be generated from measurement data of a radar or lidar sensor. However, the proposed solution is not limited to an environmental sensor including a camera. Alternatively, or additionally, the environmental sensor may comprise a lidar sensor, a radar sensor, and/or the like. In some embodiments, the environmental sensor may also comprise a combination thereof.

In some embodiments, sample data include a polar representation of a distance to one or more objects in the traffic environment and the top view representation is obtained from such polar representation. Accordingly, obtaining the top view representation may comprise obtaining a polar representation of a distance to one or more objects in the traffic environment and transforming the polar representation into the top view representation of the traffic environment in a Cartesian coordinate system.

In some embodiments, the transformation matrix includes a sensor calibration matrix for calibrating the environmental sensor of the ADS. In this case, the calibration matrix may be applied to transform the top view representation into the observation coordinate system. In this way, the calibration matrix can be reused to save effort (time and costs) for separately creating a dedicated transformation matrix.

Some embodiments of the method further comprise training the neural network using the perspective representation of the traffic environment.

In practice, the training, e.g., comprises training the neural network to segment free drivable space in the traffic environment in sensor data of the environmental sensor. In doing so, the proposed method may provide more appropriate training data for a better segmentation of drivable space. So, the neural network may distinguish better, e.g., more reliably and/or more precisely between uncovered/unoccupied and covered/occupied areas in the traffic environment, thereby providing greater safety while driving. In context of the present disclosure, an uncovered area may be understood as a space that can be captured from a point of view of a vehicle equipped with the ADS and an occupied or covered area may be understood as space which is not available or "visible" for the vehicle. In contrast, the free drivable space or unoccupied space may be understood as space which is visible and/or available for the vehicle, i.e., where the vehicle could possibly drive.

Optionally, the method comprises obtaining labels for training the ADS from the perspective representation of the traffic environment. The labels may serve for obtaining labelled training data for training the ADS.

Further embodiments of the present disclosure relate to an apparatus comprising one or more interfaces for communication and a data processing circuit configured to execute the method of any one of the preceding claims.

Also, embodiments may relate to a computer program comprising instructions which, when the computer program is executed by a computer, cause the computer to carry out an embodiment of the method proposed herein.

Further embodiments provide a machine-learning-based ADS obtained by using an embodiment of the method proposed herein.

Also, embodiments provide a vehicle comprising such an ADS.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

Fig. 1    schematically illustrates a flow chart of an embodiment of a method for an ADS;

Fig. 2a   illustrates an image of an exemplary traffic environment;

Fig. 2b   illustrates an exemplary polar representation of labels of the traffic environment;

Fig. 3    illustrates an exemplary top view representation of labels of the traffic environment;

Fig. 4a   illustrates a perspective representation of labels of the traffic environment in an observation coordinate system of an environmental sensor of the ADS;

Fig. 4b   shows an overlay of the perspective representation and the image of the traffic environment;

Fig. 5a   illustrates labels for the traffic environment in the observation coordinate system of the environmental sensor;

Fig. 5b   illustrates an overlay of the labels with the image of the traffic environment; and

Fig. 6    schematically illustrates a block diagram of an apparatus according to the present disclosure.

Detailed description of the drawings

Assisted or autonomous driving systems may comprise a camera or any other environmental sensor recording a perspective view of a traffic environment of a vehicle and provide a neural network for an evaluation of such records, e.g., for segmenting free drivable space from blocked or occupied space in the traffic environment. For such tasks, the neural network may be trained using so-called "labels" which indicate drivable space in sample measurement data of an environmental of the ADS. For a proper training, it may be ensured that the labels are obtained from sample measurement data of the same or a similar environmental sensor such that the labels match with a perspective of the environmental sensor. Appropriate labels, e.g., are available from label databases storing such labels. Further, labels from a different view of the traffic environment may be available. However, those may lack comparability with the view of the environmental sensor and, thus, may be inappropriate for training the neural network for the use with that environmental sensor. For this reason, in practice, a quality of the training of neural networks is particularly limited by an amount of available appropriate training data.

Embodiments of the present disclosure are based on the finding that initially inappropriate labels (representations) can be transformed to match the environmental sensor's view to make them suitable/available for training the neural network for the use with the environmental sensor. In this way, the amount of available appropriate labels/representations and, thus, the amount of training data may be increased for an improved training quality.

In practice, e.g., it is desired to train the neural network for the use with a camera having a tilted or horizontal view on a traffic environment of a vehicle. However, labels may exhibit a different view on the traffic environment than the view of the environmental sensor, e.g., the camera. In practice, labels exhibit a top (down) view or a polar view, i.e., a representation of a distance of one or more objects over a certain angular range. In such case, those labels may not be suitable for the use with the camera having a different perspective on the traffic environment than the labels. In particular, such labels may be inappropriate for training a neural network for the use with environmental sensors having a different view than the labels. The present disclosure particularly addresses applications in ADS and tasks of neural networks in such systems. Tasks of the trained neural network hence, e.g., include semantic segmentation, image classification, object localization, and/or the like.

The present disclosure proposes a fast and resource-saving approach to solve the above mapping problem. The proposed solution is particularly suitable for embedded systems which may be realized at a low-cost.

The proposed solution is laid out in more detail with reference to the appended drawings.

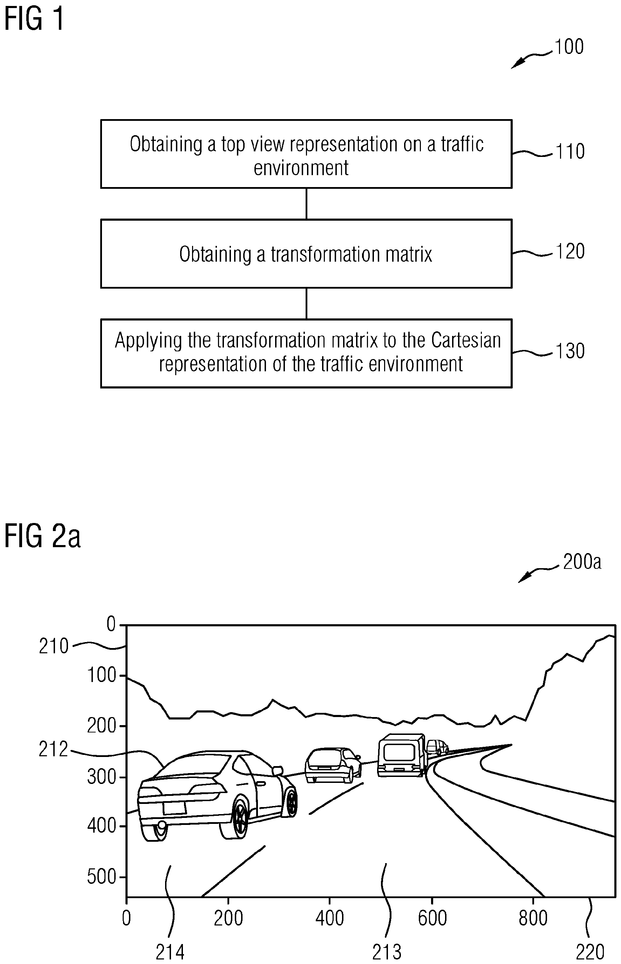

Fig. 1 schematically illustrates a flow chart of an embodiment of a method 100 for training a neural network for an ADS.

As can be seen from the flow chart, method 100 comprises obtaining 110 a top view representation of labels of a traffic environment in Cartesian coordinates from sample data. In practice, the top view representation, e.g., can be directly retrieved from a database for labels or training data. Alternatively, the sample data may include a polar representation of the labels and the top view representation may be obtained from the polar representation, as laid out in more detail later. The sample data may indicate one or more occupied/blocked areas and/or free drivable/unoccupied/unblocked areas in the traffic environment. Therefore, the sample data or the representation of the traffic environment may be understood as labels for free drivable/unoccupied space and/or covered or occupied space. Labels of the traffic environment can be understood as metadata categorizing one or more parts in the sample data. In embodiments of the present disclosure, the labels (top view or polar representation) may distinguish, in the sample data, between areas where a vehicle could drive safely and where the vehicle cannot drive (without causing or risking an accident) or at least where the ADS cannot "see" or sense the traffic environment (e.g., because it is covered). However, the environmental sensor of the ADS may have a different view of the traffic environment than the polar or top view representation of it. In practice, the environmental sensor may be a camera which is attached to the vehicle. In such cases, the camera may have a tilted or horizontal (or so-called "perspective") view of the traffic environment. So, initially, the top view representation may be inappropriate for training a neural network for the use with the camera. In other words, the top view representation may be unsuitable for using it directly as training data for the neural network for the use with the camera.

For this reason, the proposed method 100 further provides for obtaining 120 a transformation matrix for transforming Cartesian coordinates in an observation coordinate system of a perspective of an environmental sensor of the ADS. As the skilled person having benefit from the present disclosure will appreciate, the transformation matrix may provide for various suitable rotation, resizing, and/or translation operations considering a field of view, pose and/or position of the environmental sensor at the vehicle relative to the top view representation to map the top view representation of the traffic environment on the environmental sensor's view of the traffic environment.

In some embodiments a calibration matrix for calibrating the environmental sensor is used as transformation matrix. In this way, the calibration matrix for calibrating the environmental sensor, here the camera, is reused for increased efficiency and resource savings. In practice, the calibration matrix is configured for projecting a predefined calibration test setup on the measurement data of the environmental sensor to adjust measurement parameters of the environmental sensor based on uncertainties of recordings in view of the calibration test setup. The calibration matrix, e.g., is obtained from intrinsic and/or extrinsic parameters of the environmental sensor (camera).

Further, method 100 provides for applying 130 the transformation matrix to the top view representation of labels of the traffic environment to obtain a perspective representation of the labels in the observation coordinate system. In doing so, points of the top view representation are projected onto points of the environmental sensor's view of the traffic environment. So, in this way, comparability between the sample data (perspective representation) and the environmental sensor's view may be achieved. This particularly allows to use the perspective representation of the traffic environment for training the neural network for the use with the environment sensor. In this way, initially inappropriate sample data may become suitable for training the neural network to increase a total amount of training data for the use with the environmental sensor. Accordingly, the perspective representation, e.g., is used as training data for training the neural network together with related sensor data of the traffic environment. The related sensor data may be related to the sample data in the sense that it relates to the same traffic environment. In embodiments, the related sensor data represents the traffic environment as it was or would be captured by the environmental sensor. For this, the related sensor data can be recorded (prior to training the neural network) using the same or a similar environmental sensor while driving through real traffic.

For training the neural network, the perspective representation then may be used as (ground truth) labels for labelling free drivable/unoccupied and/or occupied/covered/blocked space of the traffic environment when training the neural network. In embodiments, the labels, e.g., serve for determining an error of a semantic segmentation of free drivable and blocked/occupied space in the related sensor data by the neural network and the labels. Then, the neural network may be trained such that the error is reduced or ideally minimized.

It is noted that, in practice, the sample data may be indicative of multiple (sample) traffic environments and the proposed method may be applied to sample data indicative of various traffic environments to further improve the training of the neural network.

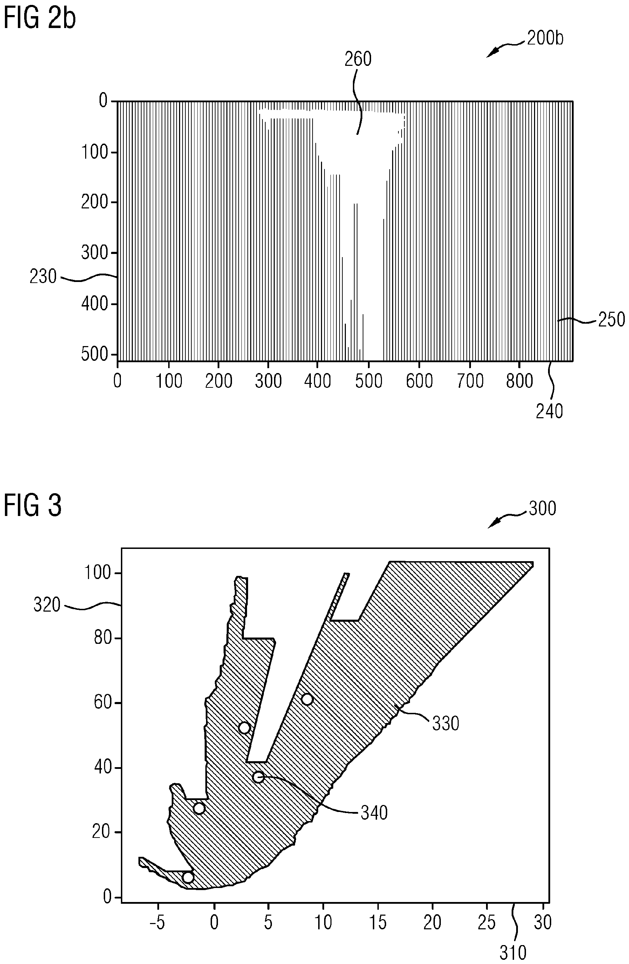

As mentioned before, in some use cases, the sample data may alternatively or additionally comprise a polar representation of the traffic situation. Further exemplary embodiments of the proposed method for such polar representations are described below in more detail with reference to Figs. 2a and 2b.

Fig. 2a illustrates an image of an exemplary traffic environment. In particular, Fig. 2a illustrates an image 200a of an environmental sensor's view of the traffic environment. For the present example, the environmental sensor, e.g., is a camera and serves for capturing sample sensor data for training a neural network for an ADS. As can be seen from the image 200a, the camera, e.g., has a tilted or horizontal view on the traffic environment and the traffic environment includes a road 213 and objects 212 here e.g., several other road users 212 driving on the road 213 in front of a vehicle equipped with the environmental sensor. It is noted that the objects may be also any other objects, e.g., persons, obstacles, animals, and/or the like.

An ordinate 210 of the image 200a indicates a vertical position (in arbitrary units) of points and an abscissa 220 of the image 200a indicates a horizontal position (in arbitrary units) of points in the image 200a.

Fig. 2b illustrates a polar representation 200b of a distance to one or more objects, here the road users 212, in the traffic environment depicted in Fig. 2a. So, the polar representation 200b and the camera image 200a are in different coordinate systems or so-called "domains". While the image 200a is in a domain of the camera, also referred to as "camera domain", the polar representation 200b is in a "polar domain". The domain of the environmental sensor, e.g., can be understood as the observation coordinate system of measurement data of the environmental sensor, here, e.g., the camera coordinate system indicative of (Cartesian) pixel coordinates.

The polar representation, e.g., is indicative of a radar measurement or any other distance measurement of the traffic environment over a certain horizontal angle range. In the present example, the distance to the road users 212 is indicated by a black/dark area 250 plotted over an ordinate 230 indicating a distance to the road users 212 (in arbitrary units) and an abscissa 240 indicating a horizontal/azimuth angle (in arbitrary units). In context of the present disclosure, the black/dark area 250 therefore may be understood as an area in the traffic environment which is occupied or at least blocked. In contrast, a white/bright area 260 in the polar representation indicates an unoccupied or free drivable space, i.e., space where a vehicle could possibly drive. The white area 260 therefore can be understood as an area in the traffic environment which is unoccupied or free drivable space.

In the present example, it can be seen, that the white/bright area 260, e.g., indicates a space which is unoccupied and/or uncovered by the road users 212, i.e., where the vehicle could possibly drive (irrespective of any prescribed minimum distance to other road users) and the black/dark area 250 indicates an area where the vehicle could not drive since it is occupied or at least blocked by the road users 212. So, the black/dark area 250, in the present example, is indicative of detections of the road users 212, here, of other vehicles.

As the skilled person having benefit from the present disclosure will appreciate, the information on the free drivable space and/or blocked/covered/occupied space may be valuable for training the neural network to segment sensor data of an environmental sensor of an ADS into free drivable/unoccupied/uncovered space and occupied/covered/blocked. However, as it is not in the camera domain, the polar representation may be unsuitable for training the neural network directly based on the polar representation. So, due to their different domains the polar representation cannot be interpreted in comparison with the camera image 200a and, thus may be inappropriate for labelling respective sample measurement data indicative of the environmental sensor's (tilted/oblique or horizontal) view of the traffic environment for training the neural network.

Therefore, the present disclosure proposes to transform the polar representation into a perspective representation aligned to the view of the environmental sensor. In other words, embodiments of the present disclosure propose to transform the sample data, here the polar representation, into the domain of the respective environmental sensor, here, the camera domain.

To this end, the embodiments of the present disclosure provide for multiple transformation steps to transform a polar representation of the traffic environment in the camera domain. In embodiments, the transformation, e.g., includes a first and at least one second transformation step. In this way, an overall computational effort for the transformation may be less than for a one-step-transformation.

In a first step of the present disclosure, it is proposed to convert the polar representation into a Cartesian domain. In particular, it is proposed to convert the polar representation into a top view of the traffic environment in Cartesian coordinates x and y.

To this end, it is proposed to calculate a total number of white/bright and black/dark pixels of the polar representation and the respective white/bright and black/dark areas 250 and 260. A number of white pixels denote the free drivable space. It is noted that the pixels are in polar coordinates, meaning the abscissa 240 corresponds to the azimuth angle (e.g., angle $\theta$ in degrees) and the ordinate 230 corresponds to the distance or range (e.g., range $r$ in meters). As well, polar center points of every white/bright pixel are used to obtain the corresponding polar coordinates, here, azimuth angle and range/distance of the respective point in the traffic environment. Then, the polar coordinates are converted to Cartesian coordinates according to

$$x = r \cdot \cos(\theta);$$

and

$$y = r \cdot \sin(\theta)$$

to obtain a top view of the traffic environment in Cartesian coordinates *x* and *y*.

Fig. 3 illustrates an exemplary top view representation 300 of the traffic environment. As can be seen, from the top view representation 300, when applying the proposed method to a polar representation, the top view representation 300 can be understood as a representation which indicates from an orthogonal view from above how the traffic environment is seen according to the polar representation. However, due to obstructions, the polar representation may lack one or more objects that may be seen when actually looking at the traffic environment from above. Therefore, the top view representation 300 may lack objects, e.g., further road users, which are covered by the road users 212 but, actually, are within the observed traffic environment.

However, in other use cases, the top view representation may represent the traffic environment as it is (actually) seen from above (not shown).

As can be seen from Fig. 3, the top view representation 300 indicates the free drivable/unoccupied or at least uncovered space 330 according to the polar representation 200b. For this, the free drivable/unoccupied and/or uncovered space 330 is plotted over Cartesian coordinates indicated by an abscissa 310 and an ordinate 320 of the top view representation 300. In the present example, to obtain the top view representation, the proposed transformation is, e.g., applied to the white/bright area 260 in the polar representation 200b.

Marks 340 indicate detections of the road users 212 which can be seen in the top view representation 300.

In the second transformation step, the top view representation 300, then, is projected in the environmental sensor's domain, i.e., such that it aligns to the environmental sensor's view, here, to the camera's view (see Fig. 2a).

For this, points or coordinates of the free drivable/unoccupied and/or uncovered space 330 are converted to pixel coordinates of the camera image 200a using an appropriate transformation matrix which is configured to apply appropriate rotational, resizing, and/or translational operations to the coordinates of the free drivable/unoccupied and/or uncovered space 330. The skilled person having benefit from the present disclosure will appreciate that, for this, the calibration matrix of the camera may be applied.

The converted coordinates, then, (approximately) correspond to pixel coordinates of a respective position of the traffic environment in the camera image 200a. In this way, a perspective view of the traffic environment according to the polar representation 200b is obtained.

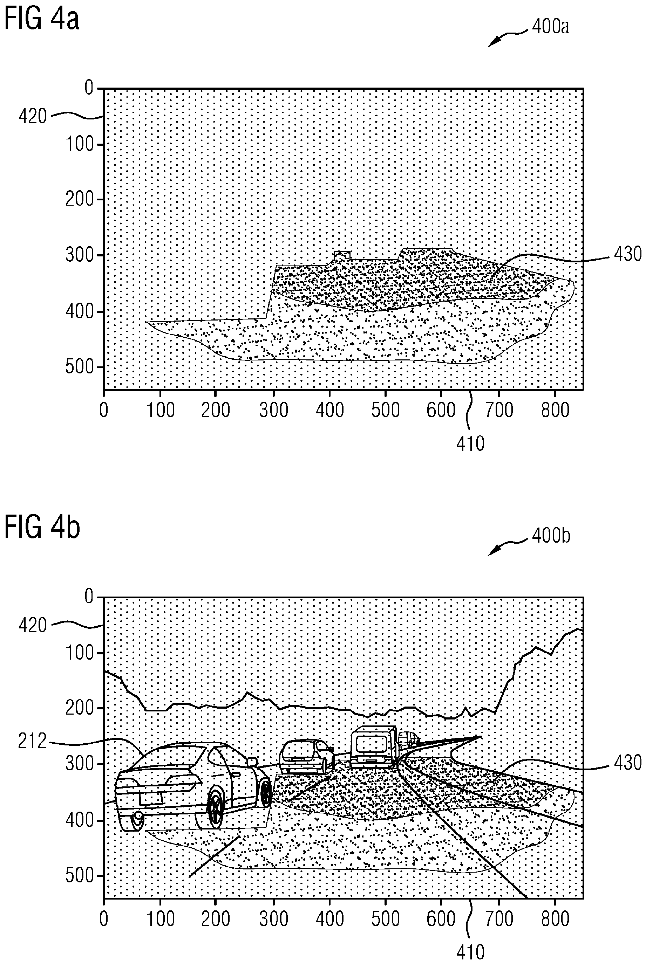

An exemplary perspective view 400a of the traffic environment is illustrated in Fig. 4a. As can be seen from Fig. 4a, the obtained pixel coordinates, e.g., are illustrated by colored pixels 430 plotted over horizontal pixel coordinates indicated by an abscissa 410 and vertical pixel coordinates indicated by an ordinate 420.

As can be seen from an overlay 400b of the perspective representation 400a and the camera image 200a in Fig. 4b, the colored pixels 430, thus, indicate the free drivable/unoccupied or uncovered space around the road users 212 in the camera domain.

As can be seen from Figs. 4a and 4b, the free drivable/unoccupied or uncovered space indicated by the pixels 430 may exhibit some gaps in between. To get rid of them, the present disclosure proposes to obtain a connected area, also referred to as a "mask", indicating the free drivable/unoccupied or uncovered space. To this end, it is proposed that, e.g., a polygon mesh is created based on those of the pixels 430 having the highest $y$-value for some or all $x$-values. In this way, a connected area indicating the free drivable or uncovered space in the traffic environment is obtained.

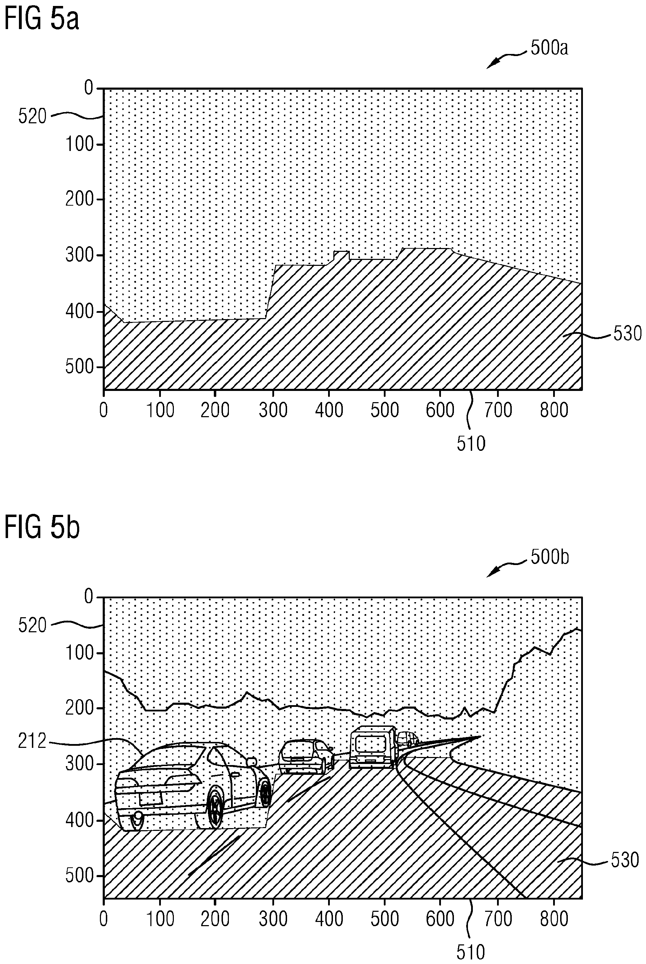

For visualization, Fig. 5a shows a diagram 500a which schematically illustrates an exemplary mask 530 indicating the free drivable or uncovered space. Here, the mask 530 is plotted over an abscissa 510 indicating the $x$-coordinate and over an ordinate indicating the $y$-coordinate in the camera domain. As can be seen, the mask 530 is a connected area, here visualized as a fully colored area in diagram 500a.

As further illustrated by Fig. 5b showing an overlay 500b of the camera image 200a and the mask 530, it approximately matches with the free space in between the road users 212 in the camera image 200a. So, as could be shown, the perspective representation as well as the mask 530 is suitable to label free drivable space or uncovered space in training a neural network on camera images for the use with a camera for such images.

So, the proposed concept provides a working approach to prepare initially unsuitable sample data for training of a neural network with an environmental sensor having a different view on the traffic environment than the (initial) sample data. In this way, sample data indicative of measurements of environmental sensors of a different sensor type than the environmental sensor are made available for training and the neural network may be trained for various tasks using the transformed sample data. In practice, the neural network, e.g., is trained to segment free drivable space in the traffic environment in sensor data of the environmental sensor (see Fig. 5b).

As could be further shown, in doing so, the proposed multi-step transformation allows for the use of resource-saving transformations which may need less computational power than a potential direct single-step transformation. In particular, the proposed approach allows for reusing the calibration matrix for the transformation from the top view representation to the environmental sensor's domain for further resource savings. So, in implementations, the proposed solution saves a lot of time and cost, e.g., as videos for sample data may not need to be recorded from scratch to generate ground truth labels. Also, the present approach, particularly the multi-step transformation using resource-saving transformations, may save time compared to other concepts such that the proposed approach may be also applied in real-time applications, e.g., for sensor data fusion.

It should be noted that, although, in the present disclosure, representations of the traffic environment are presented visually for a better comprehensibility, in practice, the representations may be or comprise machine-readable (e.g., numerical, or number-based) representations.

It is also noted that, although, embodiments may be explained only in connection with a specific environmental sensor, e.g., the camera, the proposed approach also applies for other (types of) environmental sensors, e.g., lidar, radar sensors, and/or the like. So, the proposed approach is not only suitable for Radar-Camera label conversion, but also for any kind of data/sensor combinations.

In embodiments, the method proposed herein may be implemented in software, i.e., in a computer program which enables a computer or any other programmable hardware to execute the proposed approach.

As well, the proposed approach may be implemented in an apparatus, e.g., an apparatus for processing training data and/or training an ADS. The skilled person having benefit from the present disclosure will appreciate that the proposed method may be executed on a vehicle as well as in a training setup separate from any vehicle. Accordingly, the apparatus may be installed in a vehicle as well as separate from any vehicle. In some embodiments, the proposed approach is implemented in an ADS for a vehicle.

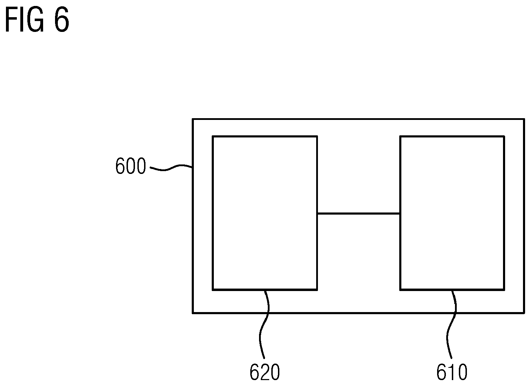

An exemplary embodiment of such an apparatus is laid out in more detail with reference to Fig. 6.

Fig. 6 schematically illustrates a block diagram of an apparatus 600 comprising one or more interfaces 610 for communication and a data processing circuit 620 configured to execute the method of any one of the preceding claims.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programable gate arrays, one or more central and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for an autonomous/assisted driving system, ADS, for a vehicle, the method comprising:

    obtaining (110) a top view representation of labels of a traffic environment in Cartesian coordinates from sample data;
    obtaining (120) a transformation matrix for transforming Cartesian coordinates in an observation coordinate system of a perspective of an environmental sensor of the ADS; and
    applying (130) the transformation matrix to the top view representation of the labels to obtain a perspective representation of the traffic environment in the observation coordinate system.

2. The method (100) of claim 1, wherein obtaining (110) the top view representation of labels of the traffic environment comprises obtaining a polar representation of a distance to one or more objects in the traffic environment and transforming the polar representation into the top view representation of the labels in a Cartesian coordinate system.

3. The method (100) of claim 1 or 2, wherein the transformation matrix includes a sensor calibration matrix for calibrating the environmental sensor of the ADS.

4. The method (100) of any one of the preceding claims, wherein the environmental sensor of the ADS comprises at least one camera, lidar sensor, and/or radar sensor.

5. The method (100) of any one of the preceding claims, wherein the method further comprises training the neural network using the perspective representation of the traffic environment.

6. The method (100) of claim 5, wherein the training comprises training the neural network to segment free drivable space in the traffic environment in sensor data of the environmental sensor.

7. The method (100) of any one of the preceding claims, wherein the method comprises obtaining labels for training the ADS from the perspective representation of the traffic environment.

8. The method (100) of any one of the preceding claims, wherein the sample data is indicative of measurement data of another environmental sensor, wherein the other environmental sensor is of a different type of sensor than the environmental sensor of the ADS.

9. An apparatus (600) comprising:

   one or more interfaces (610) for communication; and
   a data processing circuit (620) configured to execute the method of any one of the preceding claims.

10. A computer program comprising instructions which, when the computer program is executed by a computer, cause the computer to carry out the method (100) of any one of the claims 1 to 8.

11. A machine-learning-based autonomous/assisted driving system, ADS, obtained by using the method (100) of any one of the claims 1 to 8.

12. A vehicle comprising the autonomous/assisted driving system, ADS, of claim 11.

FIG 1

100

| Obtaining a top view representation on a traffic environment | 110 |

| Obtaining a transformation matrix | 120 |

| Applying the transformation matrix to the Cartesian representation of the traffic environment | 130 |

FIG 2a

200a

FIG 2b

FIG 3

## FIG 4a

400a

## FIG 4b

400b

## FIG 5a

## FIG 5b

FIG 6

Europäisches
Patentamt

European
Patent Office

Office européen
des brevets

# EUROPEAN SEARCH REPORT

Application Number

EP 23 17 2034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/193606 A1 (DOUILLARD BERTRAND ROBERT [US] ET AL) 18 June 2020 (2020-06-18) * figures 1, 4A, 4B, 5A, 5B, 6A-D, 10A * * paragraph [0026] – paragraph [0029] * * paragraph [0031] – paragraph [0038] * * paragraph [0046] – paragraph [0052] * * paragraph [0057] – paragraph [0060] * * paragraph [0074] – paragraph [0080] * * paragraph [0089] * | 1,2,4-12 | INV.<br>G06V10/143<br>G06V10/24<br>G06V10/75<br>G06V10/774<br>G06V10/80<br>G06V10/82<br>G06V20/56<br>G06V20/64<br>G06V20/70<br>G06N3/08 |
| X | US 2023/046410 A1 (WIDJAJA SERGI ADIPRAJA [SG] ET AL) 16 February 2023 (2023-02-16) * figures 1, 2, 5, 7 * * paragraph [0002] * * paragraph [0022] – paragraph [0023] * * paragraph [0095] – paragraph [0101] * | 1,4-6, 9-12 | |
| X | US 2022/024485 A1 (THEVERAPPERUMA LALIN [US] ET AL) 27 January 2022 (2022-01-27) * abstract * * figures 3, 4, 6, 9, 11 * * paragraph [0080] – paragraph [0084] * | 1,3-7, 9-12 | TECHNICAL FIELDS SEARCHED (IPC)<br><br>G06V<br>G06N |
| X | US 2022/111864 A1 (JARQUIN ARROYO JULIO FERNANDO [DE] ET AL) 14 April 2022 (2022-04-14) * abstract * * figures 1-4, 7-9, 14, 15 * * paragraph [0001] * * paragraph [0021] – paragraph [0028] * * paragraph [0036] * * paragraph [0065] – paragraph [0077] * * paragraph [0085] – paragraph [0104] * | 1,3-5, 7-12 | |

The present search report has been drawn up for all claims

| Place of search | Date of completion of the search | Examiner |
|---|---|---|
| The Hague | 23 August 2023 | Konya, Iuliu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 2034

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2023

| Patent document cited in search report | | Publication date | Patent family member(s) | | Publication date |
|---|---|---|---|---|---|
| US 2020193606 | A1 | 18-06-2020 | US | 10593042 B1 | 17-03-2020 |
| | | | US | 2020193606 A1 | 18-06-2020 |
| US 2023046410 | A1 | 16-02-2023 | CN | 115705693 A | 17-02-2023 |
| | | | DE | 102021131489 A1 | 16-02-2023 |
| | | | GB | 2609992 A | 22-02-2023 |
| | | | KR | 20230023530 A | 17-02-2023 |
| | | | US | 2023046410 A1 | 16-02-2023 |
| US 2022024485 | A1 | 27-01-2022 | AU | 2021313775 A1 | 23-02-2023 |
| | | | BR | 112023001159 A2 | 04-04-2023 |
| | | | CA | 3189467 A1 | 27-01-2022 |
| | | | EP | 4186230 A1 | 31-05-2023 |
| | | | US | 2022024485 A1 | 27-01-2022 |
| | | | WO | 2022020028 A1 | 27-01-2022 |
| US 2022111864 | A1 | 14-04-2022 | CN | 116343163 A | 27-06-2023 |
| | | | US | 2022111864 A1 | 14-04-2022 |

EPO FORM P0459

For more details about this annex : see Official Journal of the European Patent Office, No. 12/82